# EUROPEAN PATENT SPECIFICATION

(11) **EP 1 810 739 B1**
(45) Date of publication and mention of the grant of the patent: **13.11.2013**
(21) Application number: 07100088.9
(22) Date of filing: 04.01.2007
(51) Int. Cl.: B01D 53/94, B01J 21/06, B01J 23/10, B01J 23/63

(54) **Exhaust gas purification catalyst**
Abgasreinigungskatalysator
Catalyseur de purification des gaz d'échappement

(30) Priority: 12.01.2006 JP 2006004890
(43) Date of publication of application: 25.07.2007
(73) Proprietor: Mazda Motor Corporation, Aki-gun, Hiroshima 735-8670 (JP)
(72) Inventor: Minoshima, Koji, c/o Mazda Motor Corporation, Aki-gun, 730-8670 Hiroshima Hiroshima (JP); Takami, Akihide, c/o Mazda Motor Corporation, Aki-gun, 730-8670 Hiroshima Hiroshima (JP); Yamada, Hiroshi, c/o Mazda Motor Corporation, Aki-gun, 730-8670 Hiroshima Hiroshima (JP); Miyoshi, Seiji, c/o Mazda Motor Corporation, Aki-gun, 730-8670 Hiroshima Hiroshima (JP)
(74) Representative: Thoma, Michael

(56) References cited:
- EP-A1- 0 955 267
- EP-A1- 1 340 537
- WO-A-98/13139
- WO-A-98/45027
- WO-A-02/072256
- JP-A- 2004 174 490

## Description

### 1. Field of the Invention

The present invention relates to an exhaust gas purifying catalyst in which a catalyst layer including a cerium-zirconium (CeZr) based composite oxide having a catalytic noble metal arranged at at least one of a lattice position and an interlattice position of a crystal structure thereof is formed on a surface of a honeycomb-shaped substrate. A catalyst according to the preamble of claim 1 is known from WO 98/45027.

### 2. Description of the Related Art

In late years, a catalyst containing an oxygen-absorbing material together with alumina and others has been increasingly used as an exhaust gas purifying catalyst. This oxygen-absorbing material has a characteristic (so-called "oxygen absorbing/releasing capability") of absorbing and storing oxygen when an exhaust gas atmosphere is in an oxygen-excess state, and releasing the stored oxygen when an exhaust gas atmosphere is in an oxygen-deficient state. Based on this characteristic, an air-fuel ratio range capable of purifying HC, CO and NOx in exhaust gas can be extended to achieve enhanced exhaust gas purifying performance.

Heretofore, a composite oxide containing Ce and Zr has been known as the above oxygen-absorbing material. As to such a composite oxide, the applicant of this application proposed an oxygen-absorbing material having a catalytic metal arranged at a lattice position or an interlattice position of a crystal structure thereof, and an exhaust gas purifying catalyst including such oxygen-absorbing material, for example, in Japanese Patent Laid-Open Publication No. 2004-174490 (hereafter referred to as "Patent Publication 1"). This Patent Publication 1 discloses a technique of arranging a catalytic noble metal at a lattice position or an interlattice position of a crystal structure of a composite oxide containing Ce and Zr. This technique makes it possible to provide enhanced oxygen absorbing/releasing capability while preventing sintering of the catalytic noble metal, and thereby maintain a high purifying performance over a long period of time. The Patent Publication 1 also discloses an oxygen-absorbing material containing neodymium in addition to the Ce, Ze and catalytic noble metal.

The Patent Publication 1 includes the description that, in the oxygen-absorbing material having a catalytic metal arranged at a lattice position or an interlattice position of the crystal structure thereof, a light-off (warm-up) characteristic (T50) and a high-temperature purifying performance (C400, C500) are optimized when a mass ratio of ZrO₂ to a total mass of CeO₂ and ZrO₂ is at approximately 25 mass% and 80 mass%. Further, it is described that the ZrO₂ mass ratio range is preferably set in the range of 20 to 30 mass% or 65 to 90 mass%. Conversely, this description means that there is still room for improvement in a ZrO₂ mass ratio range other than the above ranges.

### SUMMARY OF THE INVENTION

In view of the above technical problem, it is an object of the present invention to provide an exhaust gas purifying catalyst comprising an oxygen absorbing material having a catalytic noble metal arranged at at least one of a lattice position and an interlattice position of a crystal structure of a composite oxide containing Ce and Zr, which is capable of sufficiently exhibiting a catalytic function even if a ZrO₂ mass ratio is out of the range of 20 to 30 mass% or 65 to 90 mass%.

In order to achieve the above object, the present invention provides an exhaust gas purifying catalyst which comprises a honeycomb-shaped substrate, and a catalyst layer formed on a surface of the substrate. The catalyst layer includes a cerium-zirconium (CeZr) based composite oxide which has a catalytic noble metal arranged at at least one of a lattice position and an interlattice position of a crystal structure thereof. In the exhaust gas purifying catalyst, the composite oxide contains ceria (CeO₂) and zirconia (ZrO₂) in such a manner that a mass ratio of the ceria to a total mass of the ceria and zirconia falls within the range of 36 to 64 mass%. The composite oxide further contains, in the form of an oxide, a rare-earth metal other than cerium (Ce), in the range of 3 to 20 mass% with respect to a total mass of the composite oxide.

Further, the rare-earth metal other than Ce is at least one selected from the group consisting of praseodymium (Pr), lanthanum (La) and yttrium (Y). Aft least one of these rare-earth metal elements can be doped in the composite oxide to reliably improve the high-temperature purifying performance for HC, CO and NOx.

The above exhaust gas purifying catalyst of the present invention can provide enhanced high-temperature purifying performance for HC, CO and NOx, even in the ZrO₂ mass ratio range where there has been room for improvement in a purifying performance in the conventional oxygen absorbing material comprising a composite oxide which contains no rare-earth metal other than Ce, i.e., consists only of Ce and Zr, and has a noble metal arranged at at least one of a lattice position and an interlattice position of a crystal structure of the composite oxide. As the reason, it is inferred that the exhaust gas purifying catalyst of the present invention has a low decreasing rate of specific surface area due to aging, and therefore the catalytic noble metal arranged at the lattice position or the interlattice position is left at a high rate while being exposed outside from a porous surface, to ensure an opportunity for contact between the catalytic noble metal and exhaust gas, as described in detail later.

In the exhaust gas purifying catalyst of the present invention, the mass ratio of the ceria to the total mass of the ceria and zirconia may be set in the range of 44 to 64 mass%.

### BRIEF DESCRIPTION OF THE DRAWINGS

FIG. 1 is a flowchart showing a process of preparing a noble metal-doped composite oxide in an exhaust gas purifying catalyst according to one embodiment of the present invention.
FIG. 2 is a flowchart showing a process of producing a honeycomb-supported catalyst having a surface formed with a catalyst layer including the noble metal-doped composite oxide.
FIG. 3 is a graph showing a relationship between a high-temperature HC purifying rate (C400) and a CeO₂ / (CeO₂ + ZrO₂) mass ratio in a Rh-doped CeZrPr composite oxide doped with Pr as a rear-earth metal other than Ce.
FIG. 4 is a graph showing a relationship between a high-temperature CO purifying rate and a CeO₂ / (CeO₂ + ZrO₂) mass ratio in a Rh-doped CeZrPr composite oxide doped with Pr as a rear-earth metal other than Ce.
FIG. 5 is a graph showing a relationship between a high-temperature NOx purifying rate and a CeO₂ / (CeO₂ + ZrO₂) mass ratio in a Rh-doped CeZrPr composite oxide doped with Pr as a rear-earth metal other than Ce.
FIG. 6 is a table showing a relationship between a BET specific surface area and a mass ratio of Pr₆O₁₁ contained in an Rh-doped composite oxide, in each of Inventive Examples A to D and Comparative Examples E and F.
FIG. 7 is a table showing a basic composition of each of Inventive Examples A to D and Comparative Examples E and F in FIG. 6
FIG. 8 is a table showing a relationship between a high-temperature HC purifying rate (C400) and a CeO₂ / (CeO₂ + ZrO₂) mass ratio in a Rh-doped CeZrLa composite oxide doped with La as a rear-earth metal other than Ce.
FIG. 9 is a table showing a relationship between a high-temperature CO purifying rate (C400) and a CeO₂ / (CeO₂ + ZrO₂) mass ratio in a Rh-doped CeZrLa composite oxide doped with La as a rear-earth metal other than Ce.
FIG. 10 is a table showing a relationship between a high-temperature NOx purifying rate (C400) and a CeO₂ / (CeO₂ + ZrO₂) mass ratio in a Rh-doped CeZrLa composite oxide doped with La as a rear-earth metal other than Ce.
FIG. 11 is a table showing a relationship between a high-temperature HC purifying rate (C400) and a CeO₂ / (CeO₂ + ZrO₂) mass ratio in a Rh-doped CeZrY composite oxide doped with Y as a rear-earth metal other than Ce.
FIG. 12 is a table showing a relationship between a high-temperature CO purifying rate (C400) and a CeO₂ (CeO₂ + ZrO₂) mass ratio in a Rh-doped CeZrY composite oxide doped with Y as a rear-earth metal other than Ce.
FIG. 13 is a table showing a relationship between a high-temperature NOx purifying rate (C400) and a CeO₂ / (CeO₂ + ZrO₂) mass ratio in a Rh-doped CeZrY composite oxide doped with Y as a rear-earth metal other than Ce.
FIG. 14 is a table showing a BET specific surface area in each of a Rh-doped CeZr composite oxide which includes an oxide containing a rear-earth metal other than Ce, in an amount of 10 mass%, and a Rh-doped CeZr composite oxide doped with no rear-earth metal other than Ce.

### DETAILED DESCRIPTION OF THE PREFERRED EMBODIMENTS OF THE INVENTION

With reference to the accompanying drawings, an embodiment of the present invention will now be described.

### [Preparation Process for Noble Metal-Doped Composite Oxide]

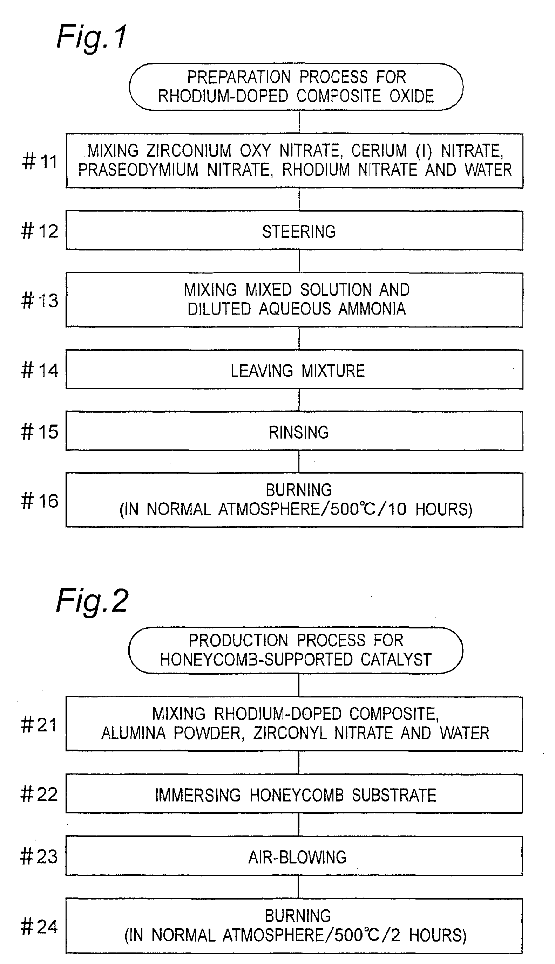

A preparation process for a noble metal-doped composite oxide serving as an oxide-absorbing material will be firstly described. In this embodiment, a ceria-zirconia-praseodymia (ZrO₂-CeO₂-Pr₆Oₙ) having rhodium arranged at a lattice position or an interlattice position of a crystal structure thereof will be taken as one example of a composite oxide. FIG. 1 shows a preparation process therefor.

Firstly, respective given amounts of zirconium oxy nitrate (ZrO (NO₃)₂ · 2H₂O), cerium (I) nitrate (Ce (NO₃)₃· 6H₂O), praseodymium nitrate (Pr (NO₃)₃ · 6H₂O), rhodium nitrate (Rh (NO₃)₃· nH₂O) and water were mixed together to form total 400 ml of mixed solution (#11). Then, the mixed solution was stirred at room temperature for about 1 hour (#12).

Then, diluted aqueous ammonia was mixed with the stirred mixed solution (#13). This mixing was completed by stirringly mixing the mixed solution and the aqueous ammonia together. Subsequently, the solution becoming clouded by mixing the aqueous ammonia was left for one day and night (#14), and then sufficiently rinsed with water (#15). Then, the rinsed cake was burnt in a normal atmosphere under the condition that it was kept at a temperature of 500°C for 10 hours (#16). In this preparation process, a step of drying the cake at 150°C between the rinsing (#15) and the burning (#16) as disclosed, for example, in the Japanese Patent Laid-Open Publication No. 2004-174490 is not included between the rinsing step (#15) and the burning step (#16). In such a process including no drying step, the sediment (hydroxide) is quickly heated up to a burning temperature, and therefore water or the like relatively intensely evaporates through and between primary particles or secondary particles to form a great number of fine pores (i.e., increase a specific surface area). This might have a relation with the fact that a catalytic noble metal is exposed outside from a pore surface at a higher rate to provide enhanced purifying performance. However, the omission of the drying step is no more than one example, and not essential to the present invention.

Through the above process, a powder-form composite oxide with a structure where rhodium is arranged at a lattice position or an interlattice position of a ceria-zirconia-praseodymia composite oxide is obtained. This composite oxide will hereinafter be referred to as "Rh-doped CeZrPr composite oxide". In this embodiment, all samples were prepared such that an amount of rhodium doped in a Rh-doped CeZrPr composite oxide to be finally obtained is set at 0.18 mass%.

### [Production Process for Honeycomb-Supported Catalyst]

FIG. 2 is a flowchart showing a production process for a honeycomb-supported catalyst. In this process, the Rh-doped composite oxide prepared through the process described with reference to FIG. 1, an alumina (Al₂O₃) powder and zirconyl nitride (ZrO (NO₃)₂) and water were firstly mixed together (#21). Though this step, a slurry was formed. Then, a honeycomb substrate made of cordierite was immersed in the slurry (#22). Through this step, a catalytic layer was formed on a surface of the honeycomb substrate. Then, an excess slurry attached on the honeycomb substrate surface was blown by an air blower (#23). The steps #22 and #23 were repeated plural times to ensure a desired coating amount of the catalytic layer on the honeycomb substrate surface. Finally, the honeycomb-supported catalyst was burnt in a normal atmosphere at 500°C for 2 hours (#24).

Through the above process, a honeycomb-supported catalyst is produced. The honeycomb substrate used in this embodiment has a diameter of 25.4 mm and a length of 50 mm. Further, the number of cells was 400 per square inch (about 6.54 cm²), and a thickness of a wall separating between the adjacent cells was 4 mil (about 0.10 mm). In this embodiment, the catalytic layer was coated on the honeycomb substrate surface to allow an amount of doped rhodium to be set at 0.2 g per litter of the substrate in the honeycomb-supported catalyst to be finally obtained.

The inventors evaluated a high-temperature purifying performance after a thermal history (aging) in a normal atmosphere at 1000°C for 24 hours, for a plurality of honeycomb-supported catalysts produced through the above processes described with reference to FIGS. 1 and 2. The plurality of honeycomb-supported catalysts are different from each other in that they are prepared to be varied in a basic composition (ZrO₂ : CeO₂: Pr₆O₁₁) of the composite oxide in preparation process for rhodium-doped composite oxide as shown in FIG. 1. Specifically, a catalyst material was prepared by setting a mass ratio of CeO₂ / (CeO₂ + ZrO₂) at approximately constant values of about 36 mass%, about 44 mass%, about 50 mass% and about 64 mass%, and changing a Pr₆O₁₁ doping ratio (Pr₆O₁₁ / (CeO₂ + ZrO₂ + Pr₆O₁₁)) in the range of 0 (zero) to 25 mass%.

In the following description, four types of composite oxides in which the CeO₂ / (CeO₂ + ZrO₂) mass ratio is equally set at about 36 mass%, and the Pr₆O₁₁ doping ratio is set, respectively, at about 3 mass%, about 5 mass%, about 10 mass%, about 20 mass%, or four types of honeycomb-supported catalysts produced using the respective composite oxides, will be referred to respectively as Inventive Examples 1a, 1b, 1c and 1d. Further, four types of composite oxides in which the CeO₂ / (CeO₂ + ZrO₂) mass ratio is equally set at about 44 mass%, and the Pr₆O₁₁ doping ratio is set, respectively, at about 3 mass%, about 5 mass%, about 10 mass%, about 20 mass%, or four types of honeycomb-supported catalysts produced using the respective composite oxides, will be referred to respectively as Inventive Examples 2a, 2b, 2c and 2d. Furthermore, four types of composite oxides in which the CeO₂ / (CeO₂ + ZrO₂) mass ratio is equally set at about 64 mass%, and the Pr₆O₁₁ doping ratio is set, respectively, at about 3 mass%, about 5 mass%, about 10 mass%, about 20 mass%, or four types of honeycomb-supported catalysts produced using the respective composite oxides, will be referred to respectively as Inventive Examples 3a, 3b, 3c and 3d.

In addition, for comparison with the above Inventive Examples, a composite oxide in which the CeO₂ / (CeO₂ + ZrO₂) mass ratio is set at about 36 mass%, and the Pr₆O₁₁ doping ratio is set at 0 (zero) mass%, or a honeycomb-supported catalyst produced using the composite oxide, will be referred to as Comparative Example 1 e. Further, a composite oxide in which the CeO₂ / (CeO₂ + ZrO₂) mass ratio is set at about 44 mass%, and the Pr₆O₁₁ doping ratio is set at 25 mass%, or a honeycomb-supported catalyst produced using the composite oxide, will be referred to as Comparative Example 1f. Furthermore, a composite oxide in which the CeO₂ / (CeO₂ + ZrO₂) mass ratio is set at about 50 mass%, and the Pr₆O₁₁ doping ratio is set at 0 (zero) mass%, or a honeycomb-supported catalyst produced using the composite oxide, will be referred to as Comparative Example 2e. Additionally, a composite oxide in which the CeO₂ / (CeO₂ + ZrO₂) mass ratio is set at about 64 mass%, and the Pr₆O₁₁ doping ratio is set at 0 (zero) mass%, or a honeycomb-supported catalyst produced using the composite oxide, will be referred to as Comparative Example 3e.

### [Evaluation on Purifying Performance]

In an evaluation on purifying performance, respective high-temperature purifying rates about HC, CO and NOx emissions in each of Inventive Examples and Comparative Examples were measured using a model-gas flow reactor and an exhaust emission analyzer. C400 means a purifying rate when an exhaust gas temperature at an inlet of the catalyst is 400°C. In advance of the measurement for each of the honeycomb-supported catalysts, a pre-condition setting was performed to equalize measurement conditions. Specifically, after the aging in a normal atmosphere at 1000°C for 24 hours, each of the honeycomb-supported catalysts was placed in the model-gas flow reactor, and a model gas having a temperature of 600°C and a theoretical air-fuel ratio (A/F = 14.7) was supplied for 20 minutes. In the pre-condition setting, the model gas was set to have a space velocity (SV) of 120000/hour and a temperature rising speed of 30°C/min. Further, the model gas has a composition as shown in the following Table 1.

**Table 1**

| | | | |
|---|---|---|---|
| A/F | 13.8 | 14.7 | 15.6 |
| C₃H₆ (ppm) | 541 | 555 | 548 |
| CO₂ (%) | 2.35 | 0.60 | 0.59 |
| NO (ppm) | 975 | 1000 | 980 |
| CO₂ (%) | 13.55 | 13.90 | 13.73 |
| H₂(%) | 0.85 | 0.20 | 0.20 |
| O₂(%) | 0.58 | 0.60 | 1.85 |
| H₂O (%) | 10 (by volume) | | |

In a C400 measurement after the pre-condition setting, the air-fuel ratio A/F of the model gas was set at 14.7 ± 0.9. Specifically, a mainstream gas having an A/F of 14.7 was constantly supplied, and a given amount of variational gas as shown in the above table was pulsedly added at a given frequency (1 Hz) to forcibly fluctuate the A/F at a magnitude of ± 0.9. In the measurement, the model gas was set to have a space velocity (SV) of 60000/hour and a temperature rising speed of 30°C/min.

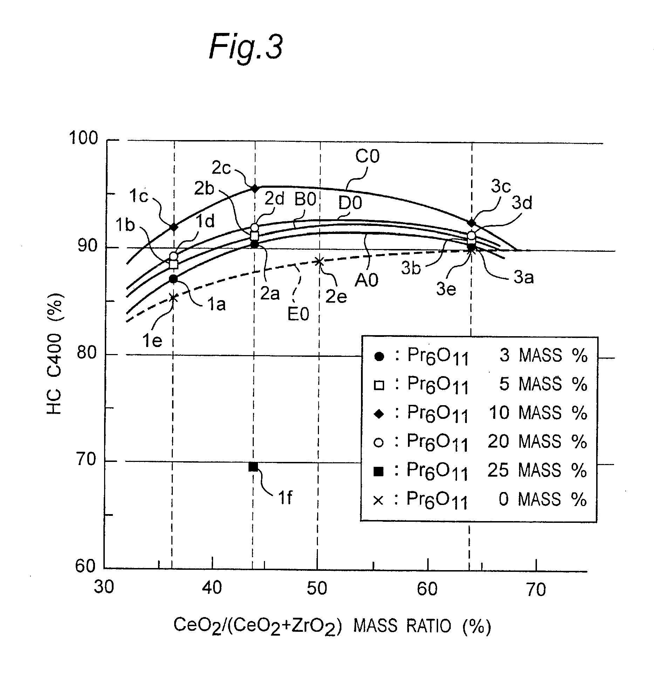

FIGS. 3 to 5 show a measurement result of the high-temperature purifying rate (C400) about HC, CO and NOx emissions in each of the honeycomb-supported catalysts of Inventive Examples 1a to 1d, 2a to 2d, 3a to 3d and Comparative Examples 1e to 3e, 1f. In FIGS. 3 to 5, the horizontal axis represents a mass ratio of CeO₂ to a total mass% of CeO₂ and ZrO₂ (i.e., CeO₂ / (CeO₂ + ZrO₂) mass ratio) and the vertical axis represents a high-temperature purifying rate (C400) about each of HC, CO and NOx emissions.

In FIG. 3, a plot curve formed by the measurement results of Inventive Examples 1a, 2a, 3a (i.e., a curve obtained under the condition that the Pr₆O₁₁ doping ratio is set at 3 mass%) is indicated by A0, and a plot curve formed by the measurement results of Inventive Examples 1 b, 2b, 3b (i.e., a curve obtained under the condition that the Pr₆O₁₁ doping ratio is set at 5 mass%) is indicated by B0 Further, a plot curve formed by the measurement results of Inventive Examples 1c, 2c, 3c (i.e., a curve obtained under the condition that the Pr₆O₁₁ doping ratio is set at 10 mass%) is indicated by C0, and a plot curve formed by the measurement results of Inventive Examples 1d, 2d, 3d (i.e., a curve obtained under the condition that the Pr₆O₁₁ doping ratio is set at 20 mass%) is indicated by D0. Additionally, a plot curve formed by the measurement results of Comparative Examples 1e, 2e, 3e (i.e., a curve obtained under the condition that the Pr₆O₁₁ doping ratio is set at 0 (zero) mass%) is indicated by E0.

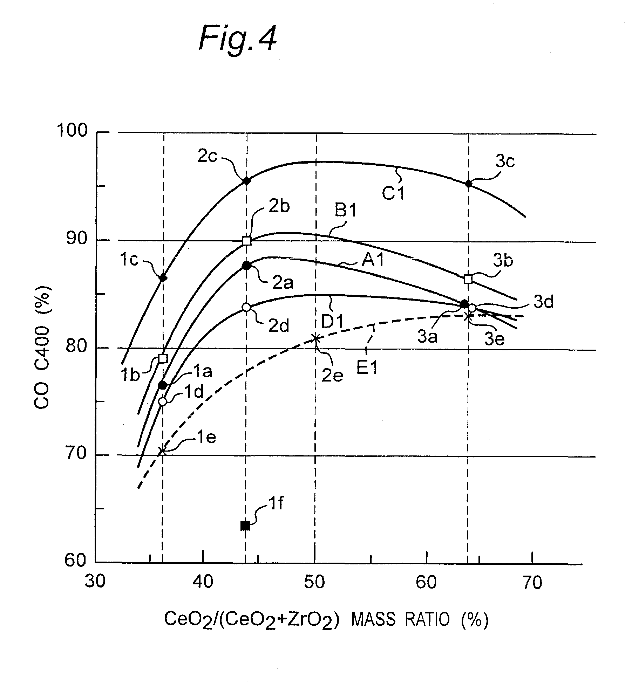

Similarly, in FIG. 4, a plot curve formed by the measurement results of Inventive Examples 1a, 2a, 3a (i.e., a curve obtained under the condition that the Pr₆O₁₁ doping ratio is set at 3 mass%) is indicated by A1, and a plot curve formed by the measurement results of Inventive Examples 1 b, 2b, 3b (i.e., a curve obtained under the condition that the Pr₆O₁₁ doping ratio is set at 5 mass%) is indicated by B1. Further, a plot curve formed by the measurement results of Inventive Examples 1c, 2c, 3c (i.e., a curve obtained under the condition that the Pr₆O₁₁ doping ratio is set at 10 mass%) is indicated by C1, and a plot curve formed by the measurement results of Inventive Examples 1d, 2d, 3d (i.e., a curve obtained under the condition that the Pr₆O₁₁ doping ratio is set at 20 mass%) is indicated by D1. Additionally, a plot curve formed by the measurement results of Comparative Examples 1 e, 2e, 3e (i.e., a curve obtained under the condition that the Pr₆O₁₁ doping ratio is set at 0 (zero) mass%) is indicated by E1.

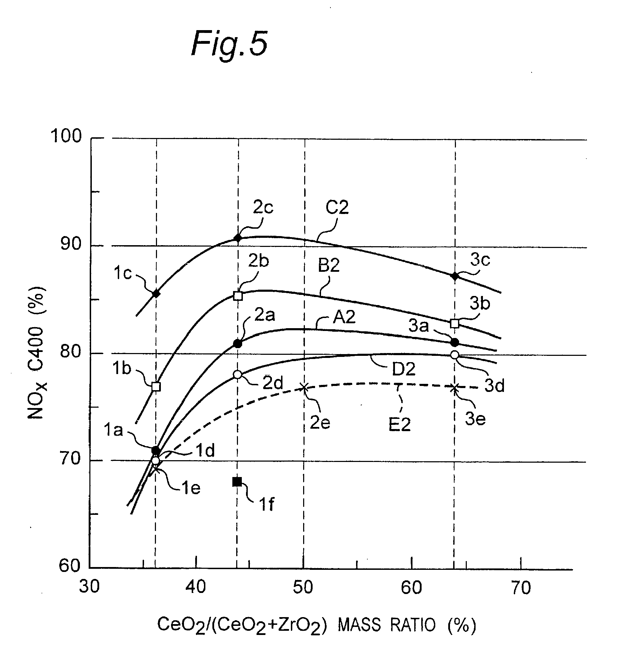

Similarly, in FIG. 5, a plot curve formed by the measurement results of Inventive Examples 1a, 2a, 3a (i.e., a curve obtained under the condition that the Pr₆O₁₁ doping ratio is set at 3 mass%) is indicated by A2, and a plot curve formed by the measurement results of Inventive Examples 1 b, 2b, 3b (i.e., a curve obtained under the condition that the Pr₆O₁₁ doping ratio is set at 5 mass%) is indicated by B2. Further, a plot curve formed by the measurement results of Inventive Examples 1c, 2c, 3c (i.e., a curve obtained under the condition that the Pr₆O₁₁ doping ratio is set at 10 mass%) is indicated by C2, and a plot curve formed by the measurement results of Inventive Examples 1d, 2d, 3d (i.e., a curve obtained under the condition that the Pr₆O₁₁ doping ratio is set at 20 mass%) is indicated by D2. Additionally, a plot curve formed by the measurement results of Comparative Examples 1e, 2e, 3e (i.e., a curve obtained under the condition that the Pr₆O₁₁ doping ratio is set at 0 (zero) mass%) is indicated by E2.

As seen in FIG. 3 about the high-temperature HC purifying rate, each of the curves A0, B0, C0, D0 corresponding, respectively, to Inventive Examples 1a to 3a, 1 b to 3b, 1c to 3c, 1 d to 3d, is formed as an upward-convexed curve in a region where the CeO₂ / (CeO₂ + ZrO₂) mass ratio is in the range of 36 to 64 mass%, to show that an adequate purifying performance is maintained. In this measurement, the curves C0, D0, B0, A0 exhibited a better purifying performance in this order.

As compared with Inventive Examples 1 a to 3a, 1b to 3b, 1 c to 3c, 1 d to 3d, the curve E0 corresponding to Comparative Examples 1 e to 3e is formed as a curve having poor upward convexity, i.e., indicating a lower high-temperature HC purifying rate, in approximately the entire region where the CeO₂ / (CeO₂ + ZrO₂) mass ratio is in the range of 36 to 64 mass%. Moreover, in Comparative Example 1f, the high-temperature HC purifying rate was significantly low, and an adequate purifying performance could not be obtained.

As seen in FIG. 4 about the high-temperature CO purifying rate, each of the curves A1, B1, C1. D1 corresponding, respectively, to Inventive Examples 1a to 3a, 1b to 3b, 1 c to 3c, 1 d to 3d, is formed as an upward-convexed curve in a region where the CeO₂ / (CeO₂ + ZrO₂) mass ratio is in the range of 36 to 64 mass%, to show that an adequate purifying performance is maintained. In this measurement, the curves C1, B1, A1, D1 exhibited a better purifying performance in this order.

As compared with Inventive Examples 1 a to 3a, 1 b to 3b, 1 c to 3c, 1 d to 3d, the curve E1 corresponding to Comparative Examples 1 e to 3e is formed as a curve having poor upward convexity, i.e., indicating a lower high-temperature CO purifying rate, in approximately the entire region where the CeO₂ / (CeO₂ + ZrO₂) mass ratio is in the range of 36 to 64 mass%. Moreover, in Comparative Example 1f, the high-temperature CO purifying rate was significantly low, and an adequate purifying performance could not be obtained.

As seen in FIG. 5 about the high-temperature NOx purifying rate, each of the curves A2, B2, C2, D2 corresponding, respectively, to Inventive Examples 1a to 3a, 1b to 3b, 1c to 3c, 1d to 3d, is formed as an upward-convexed curve in a region where the CeO₂ / (CeO₂ + ZrO₂) mass ratio is in the range of 36 to 64 mass%, to show that an adequate purifying performance is maintained. In this measurement, the curves C2, B2, A2, D2 exhibited a better purifying performance in this order.

As compared with Inventive Examples 1 a to 3a, 1 b to 3b, 1 c to 3c, 1 d to 3d, the curve E2 corresponding to Comparative Examples 1 e to 3e is formed as a curve having poor upward convexity, i.e., indicating a lower high-temperature NOx purifying rate, in approximately the entire region where the CeO₂ / (CeO₂ + ZrO₂) mass ratio is in the range of 36 to 64 mass%. Moreover, in Comparative Example 1f, the high-temperature NOx purifying rate was significantly low, and an adequate purifying performance could not be obtained.

As evidenced by the measurement result illustrated in FIGS. 3 to 5, as to each of the HC, CO and NOx purifying rates, the high-temperature purifying performance is stably ensured in the region where the CeO₂ / (CeO₂ + ZrO₂) mass ratio is in the range of 36 to 64 mass% (more preferably in the range of 44 to 64 mass%), and the Pr₆O₁₁ doping ratio is in the range of 3 to 20 mass% (more preferably in the range of 5 to 20 mass%).

As mentioned above, the technique disclosed in the Japanese Patent Laid-Open Publication No. 2004-174490 can ensure an adequate high-temperature purifying performance only when the ZrO₂ mass ratio in the Rh-doped CeZr composite oxide is in the range of 20 to 30 mass% or in the range of 65 to 90 mass%. In contrast, when the Rh-doped CeZrPr composite oxide contains CeO₂ and ZrO₂ in such a manner that the CeO₂ / (CeO₂ + ZrO₂) mass ratio is in the range of 36 to 64 mass%, and contains Pr₆O₁₁ in such a manner that the Pr₆O₁₁ doping ratio is in the range of 3 to 20 mass%, a sufficient catalytic function can be exhibited even if the ZrO₂ mass ratio is out of the range of 20 to 30 mass% or the range of 65 to 90 mass%.

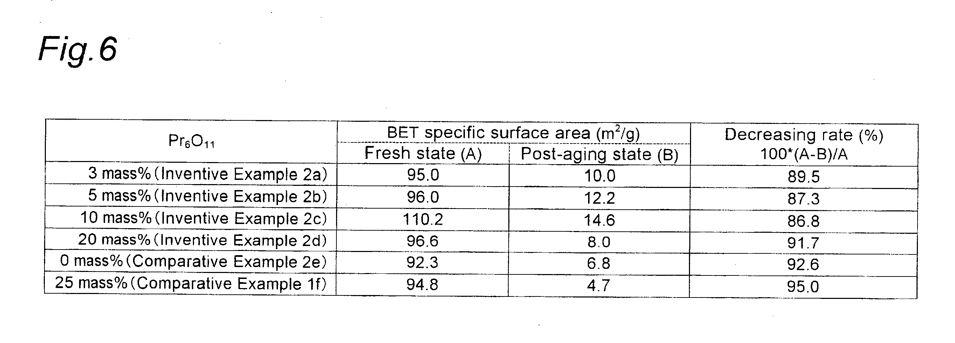

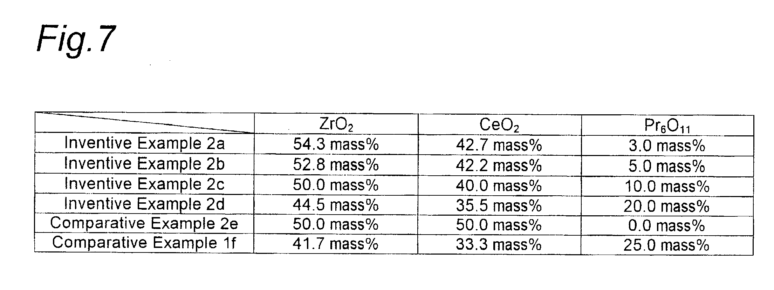

In addition to the above evaluation on purifying performance, the inventors measured a BET specific surface area of each of Rh-doped CeZrPr composite oxides corresponding, respectively, to Inventive Examples 2a, 2b, 2c, 2d and Comparative Examples 2e, 1f. FIG. 6 is a table showing a relationship between a BET specific surface area and a mass ratio of Pr₆O₁₁ contained in each of the Rh-doped composite oxides CeZrPr composite oxides corresponding, respectively, to inventive Examples 2a, 2b, 2c, 2d and Comparative Examples 2e, 1f. A basic composition of each of Inventive Examples 2a, 2b, 2c, 2d and Comparative Examples 2e, 1f is shown in FIG. 7. A mass ratio of rhodium is set at 0.18 mass% in each of the Examples.

As seen in the table illustrated in FIG. 6, in a fresh state (pre-aging state) and a post-aging state, each of Inventive Examples 2a, 2b, 2c, 2d has a BET specific surface area greater than that of each of Comparative Examples 2e, 1f. A larger BET specific surface area means a larger number of pores. The larger BET specific surface area provides an advantage of allowing the catalyst to smoothly absorb/release oxygen. In addition, rhodium as a catalytic metal to be doped in the composite oxide is exposed outside from the pores at a higher rate to provide enhanced catalytic function contributing to an exhaust gas purifying reaction and thereby achieve enhanced exhaust gas purifying performance.

While the above embodiment has been described by taking an example where Pr is employed as the rear-earth metal other than Ce, the rear-earth metal other than Ce is not limited to Pr, and may be other rear-earth metal. The following description will be made about an evaluation on purifying performance of a Rh-doped CeZrLa composite oxide or a Rh-doped CeZrY composite oxide, doped with lanthanum (La) or yttrium (Y) in place of Pr.

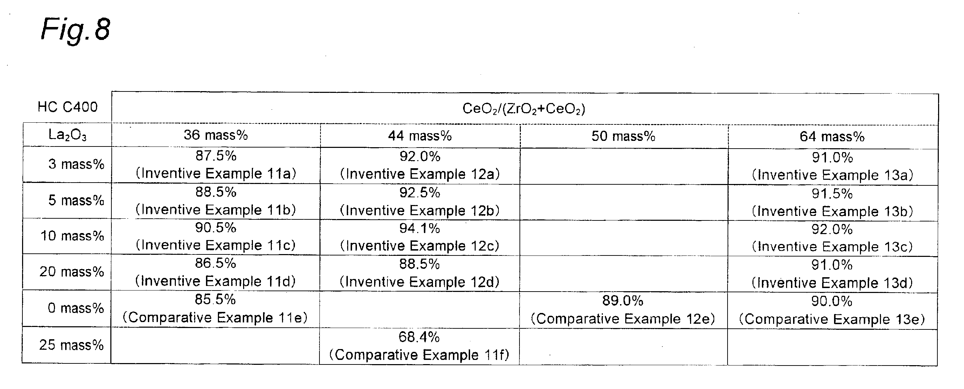

FIGS. 8 to 10 are tables showing a relationship between each of high-temperature purifying rates (C400) about HC, CO and NOx emissions and a CeO₂ / (CeO₂ + ZrO₂) mass ratio in a Rh-doped CeZrLa composite oxide doped with La as the rear-earth metal other than Ce. In this case, lanthanum nitrate (La (NO₃)₃ 6H₂O) is mixed in the strep #11 in FIG. 1 in place of praseodymium nitrate, to allow La to be doped in a finally-obtained Rh-doped CeZrLa composite oxide in the form of a lanthanum oxide (La₂O₃).

In connection with FIGS. 8 to 10, four types of composite oxides in which the CeO₂ / (CeO₂ + ZrO₂) mass ratio is equally set at about 36 mass%, and the La₂O₃ doping ratio is set, respectively, at about 3 mass%, about 5 mass%, about 10 mass%, about 20 mass%, or four types of honeycomb-supported catalysts produced using the respective composite oxides, will be referred to respectively as Inventive Examples 11a, 11b, 11c and 11d. Further, four types of composite oxides in which the CeO₂ / (CeO₂ + ZrO₂) mass ratio is equally set at about 44 mass%, and the La₂O₃ doping ratio is set, respectively, at about 3 mass%, about 5 mass%, about 10 mass%, about 20 mass%, or four types of honeycomb-supported catalysts produced using the respective composite oxides, will be referred to respectively as Inventive Examples 12a, 12b, 12c and 12d. Furthermore, four types of composite oxides in which the CeO₂ / (CeO₂ + ZrO₂) mass ratio is equally set at about 64 mass%, and the La₂O₃ doping ratio is set, respectively, at about 3 mass%, about 5 mass%, about 10 mass%, about 20 mass%, or four types of honeycomb-supported catalysts produced using the respective composite oxides, will be referred to respectively as Inventive Examples 13a, 13b, 13c and 13d.

In addition, for comparison with the above Inventive Examples, a composite oxide in which the CeO₂ / (CeO₂ + ZrO₂) mass ratio is set at about 36 mass%, and the La₂O₃ doping ratio is set at 0 (zero) mass%, or a honeycomb-supported catalyst produced using the composite oxide, will be referred to as Comparative Example 11e. Further, a composite oxide in which the CeO₂ / (CeO₂ + ZrO₂) mass ratio is set at about 44 mass%, and the La₂O₃ doping ratio is set at 25 mass%, or a honeycomb-supported catalyst produced using the composite oxide, will be referred to as Comparative Example 11f. Furthermore, a composite oxide in which the CeO₂ / (CeO₂ + ZrO₂) mass ratio is set at about 50 mass%, and the La₂O₃ doping ratio is set at 0 (zero) mass%, or a honeycomb-supported catalyst produced using the composite oxide, will be referred to as Comparative Example 12e. Additionally, a composite oxide in which the CeO₂ / (CeO₂ + ZrO₂) mass ratio is set at about 64 mass%, and the La₂O₃ doping ratio is set at 0 (zero) mass%, or a honeycomb-supported catalyst produced using the composite oxide, will be referred to as Comparative Example 13e.

As seen in the table of FIG. 8 about the high-temperature HC purifying rate, in four groups of Inventive Examples each having the same La₂O₃ doping ratio (i.e., a group of Inventive Examples 11a to 13a, a group of Inventive Examples 11b to 13b, a group of Inventive Examples 11c to 13c and a group of Inventive Examples 11d to 13d), an adequate purifying performance is maintained in the region where the CeO₂ / (CeO₂ + ZrO₂) mass ratio is in the range of 36 to 64 mass%. In this measurement, the group of Inventive Examples 11c to 13c, the group of Inventive Examples 11 b to 13b, the group of Inventive Examples 11 a to 13a and the group of Inventive Examples 11d to 13d exhibited a more stable and higher high-temperature purifying rate, and a better purifying performance, in this order.

As compared with Inventive Examples 11 a to 13a, 11b to 13b, 11c to 13c, 11d to 13d, a group of Comparative Examples 11e to 13e exhibited a lower high-temperature HC purifying rate, in approximately the entire region where the CeO₂ / (CeO₂ + ZrO₂) mass ratio is in the range of 36 to 64 mass%. Moreover, in Comparative Example 11f, the high-temperature HC purifying rate was significantly low, and an adequate purifying performance could not be obtained.

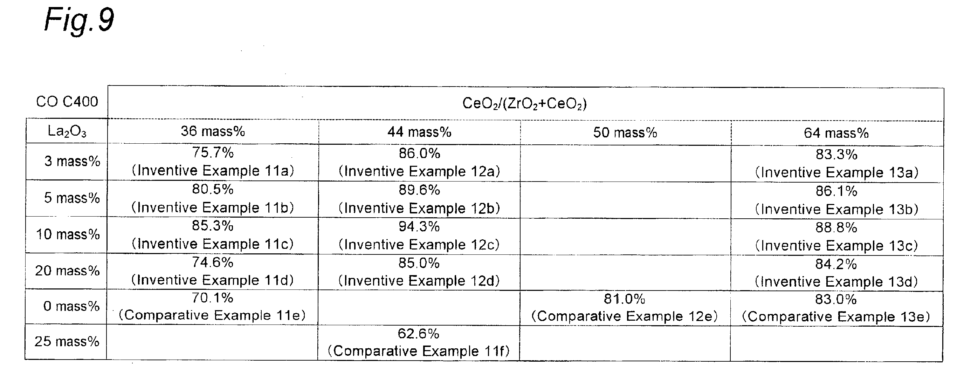

As seen in the table of FIG. 9 about the high-temperature CO purifying rate, in four groups of Inventive Examples each having the same La₂O₃ doping ratio (i.e., the group of Inventive Examples 11a to 13a, the group of Inventive Examples 11b to 13b, the group of Inventive Examples 11c to 13c and the group of Inventive Examples 11d to 13d), an adequate purifying performance is maintained in the region where the CeO₂ / (CeO₂ + ZrO₂) mass ratio is in the range of 36 to 64 mass%. In this measurement, the group of Inventive Examples 11c to 13c, the group of Inventive Examples 11b to 13b, the group of Inventive Examples 11a to 13a and the group of Inventive Examples 11d to 13d exhibited a more stable and higher high-temperature purifying rate, and a better purifying performance, in this order.

As compared with Inventive Examples 11 a to 13a, 11 b to 13b, 11 c to 13c, 11 d to 13d, the group of Comparative Examples 11e to 13e exhibited a lower high-temperature CO purifying rate, in approximately the entire region where the CeO₂ / (CeO₂ + ZrO₂) mass ratio is in the range of 36 to 64 mass%. Moreover, in Comparative Example 11f, the high-temperature CO purifying rate was significantly low, and an adequate purifying performance could not be obtained.

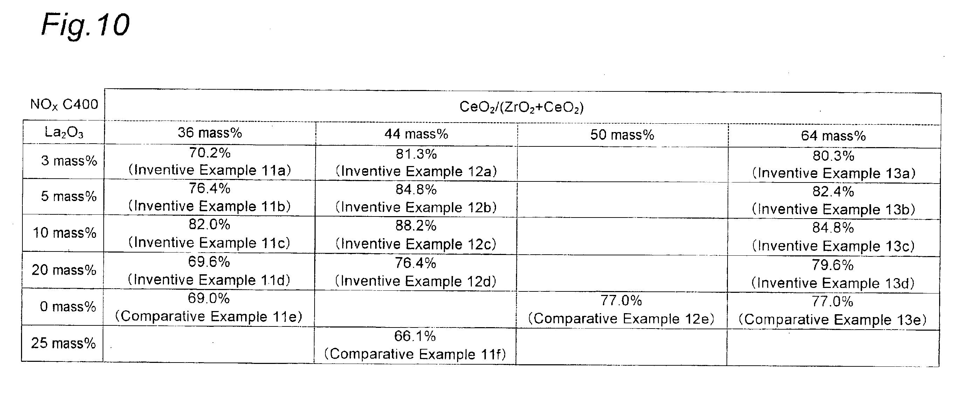

As seen in the table of FIG. 10 about the high-temperature NOx purifying rate, in four groups of Inventive Examples each having the same La₂O₃ doping ratio (i.e., the group of Inventive Examples 11a to 13a, the group of Inventive Examples 11 b to 13b, the group of Inventive Examples 11c to 13c and the group of Inventive Examples 11 d to 13d), an adequate purifying performance is maintained in the region where the CeO₂ / (CeO₂ + ZrO₂) mass ratio is in the range of 36 to 64 mass%. In this measurement, the group of Inventive Examples 11c to 13c, the group of Inventive Examples 11b to 13b, the group of Inventive Examples 11a to 13a and the group of Inventive Examples 11d to 13d exhibited a more stable and higher high-temperature purifying rate, and a better purifying performance, in this order.

As compared with Inventive Examples 11a to 13a, 11b to 13b, 11c to 13c, 11d to 13d, the group of Comparative Examples 11e to 13e exhibited a lower high-temperature NOx purifying rate, in approximately the entire region where the CeO₂ / (CeO₂ + ZrO₂) mass ratio is in the range of 36 to 64 mass%. Moreover, in Comparative Example 11f, the high-temperature NOx purifying rate was significantly low, and an adequate purifying performance could not be obtained.

As evidenced by the measurement result illustrated in FIGS. 8 to 10, as to each of the HC, CO and NOx purifying rates, the high-temperature purifying performance is stably ensured in the region where the CeO₂ / (CeO₂ + ZrO₂) mass ratio is in the range of 36 to 64 mass% (more preferably in the range of 44 to 64 mass%), and the La₂O₃ doping ratio is in the range of 3 to 20 mass% (more preferably in the range of 5 to 20 mass%). That is, when the Rh-doped CeZrLa composite oxide contains CeO₂ and ZrO₂ in such a manner that the CeO₂ / (CeO₂ + ZrO₂) mass ratio is in the range of 36 to 64 mass%, and contains La₂O₃ in such a manner that the La₂O₃ doping ratio is in the range of 3 to 20 mass%, a catalytic function can be sufficiently exhibited.

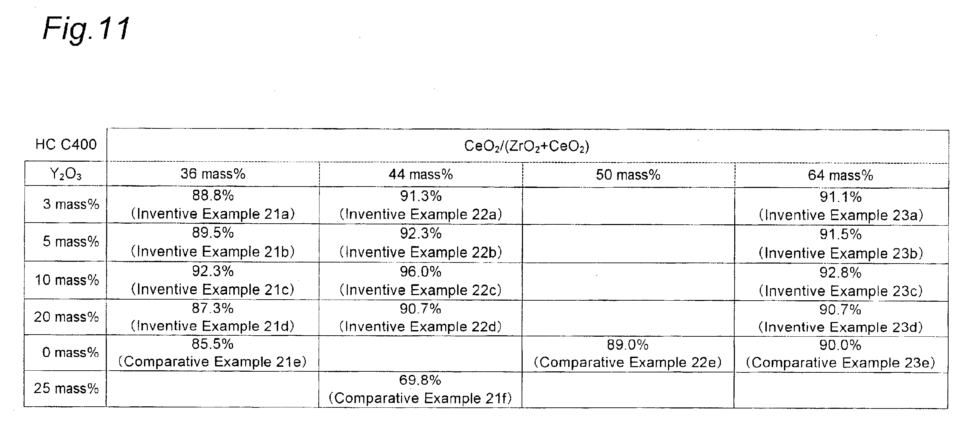

FIGS. 11 to 13 are tables showing a relationship between each of high-temperature purifying rates (C400) about HC, CO and NOx emissions and a CeO₂ / (CeO₂ + ZrO₂) mass ratio in a Rh-doped CeZrY composite oxide doped with Y as the rear-earth metal other than Ce. In this case, yttrium nitrate (Y (NO₃)₃ · 4H₂O) is mixed in the strep #11 in FIG. 1 in place of praseodymium nitrate, to allow Y to be doped in a finally-obtained Rh-doped CeZrY composite oxide in the form of an yttrium oxide (Y₂O₃).

In connection with FIGS. 11 to 13, four types of composite oxides in which the CeO₂ / (CeO₂ + ZrO₂) mass ratio is equally set at about 36 mass%, and the Y₂O₃ doping ratio is set, respectively, at about 3 mass%, about 5 mass%, about 10 mass%, about 20 mass%, or four types of honeycomb-supported catalysts produced using the respective composite oxides, will be referred to respectively as Inventive Examples 21a, 21b, 21c and 21d. Further, four types of composite oxides in which the CeO₂ / (CeO₂ + ZrO₂) mass ratio is equally set at about 44 mass%, and the Y₂O₃ doping ratio is set, respectively, at about 3 mass%, about 5 mass%, about 10 mass%, about 20 mass%, or four types of honeycomb-supported catalysts produced using the respective composite oxides, will be referred to respectively as Inventive Examples 22a, 22b, 22c and 22d. Furthermore, four types of composite oxides in which the CeO₂ / (CeO₂ + ZrO₂) mass ratio is equally set at about 64 mass%, and the Y₂O₃ doping ratio is set, respectively, at about 3 mass%, about 5 mass%, about 10 mass%, about 20 mass%, or four types of honeycomb-supported catalysts produced using the respective composite oxides, will be referred to respectively as Inventive Examples 23a, 23b, 23c and 23d.

In addition, for comparison with the above Inventive Examples, a composite oxide in which the CeO₂ / (CeO₂ + ZrO₂) mass ratio is set at about 36 mass%, and the Y₂O₃ doping ratio is set at 0 (zero) mass%, or a honeycomb-supported catalyst produced using the composite oxide, will be referred to as Comparative Example 21e. Further, a composite oxide in which the CeO₂ / (CeO₂ + ZrO₂) mass ratio is set at about 44 mass%, and the Y₂O₃ doping ratio is set at 25 mass%, or a honeycomb-supported catalyst produced using the composite oxide, will be referred to as Comparative Example 21f. Furthermore, a composite oxide in which the CeO₂ / (CeO₂ + ZrO₂) mass ratio is set at about 50 mass%, and the Y₂O₃ doping ratio is set at 0 (zero) mass%, or a honeycomb-supported catalyst produced using the composite oxide, will be referred to as Comparative Example 22e. Additionally, a composite oxide in which the CeO₂ / (CeO₂ + ZrO₂) mass ratio is set at about 64 mass%, and the Y₂O₃ doping ratio is set at 0 (zero) mass%, or a honeycomb-supported catalyst produced using the composite oxide, will be referred to as Comparative Example 23e.

As seen in the table of FIG. 11 about the high-temperature HC purifying rate, in four groups of Inventive Examples each having the same Y₂O₃ doping ratio (i.e., a group of Inventive Examples 21 a to 23a, a group of Inventive Examples 21b to 23b, a group of Inventive Examples 21c to 23c and a group of Inventive Examples 21d to 23d), an adequate purifying performance is maintained in the region where the CeO₂ / (CeO₂ + ZrO₂) mass ratio is in the range of 36 to 64 mass%. In this measurement, the group of Inventive Examples 21c to 23c, the group of Inventive Examples 21 b to 23b, the group of Inventive Examples 21 a to 23a and the group of Inventive Examples 21d to 23d exhibited a more stable and higher high-temperature purifying rate, and a better purifying performance, in this order.

As compared with Inventive Examples 21a to 23a, 21b to 23b, 21c to 23c, 21d to 23d, a group of Comparative Examples 21 e to 23e exhibited a lower high-temperature HC purifying rate, in approximately the entire region where the CeO₂ / (CeO₂ + ZrO₂) mass ratio is in the range of 36 to 64 mass%. Moreover, in Comparative Example 21f, the high-temperature HC purifying rate was significantly low, and an adequate purifying performance could not be obtained.

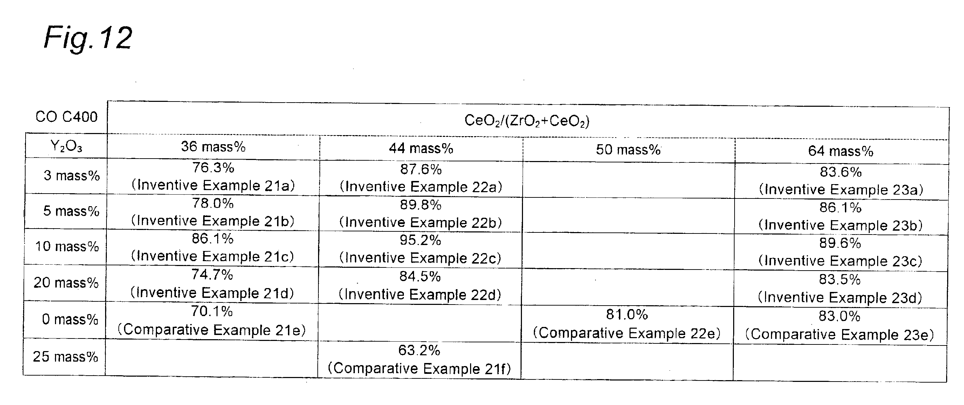

As seen in the table of FIG. 12 about the high-temperature CO purifying rate, in four groups of Inventive Examples each having the same Y₂O₃ doping ratio (i.e., the group of Inventive Examples 21a to 23a, the group of Inventive Examples 21b to 23b, the group of Inventive Examples 21c to 23c and the group of Inventive Examples 21d to 23d), an adequate purifying performance is maintained in the region where the CeO₂ / (CeO₂ + ZrO₂) mass ratio is in the range of 36 to 64 mass%. In this measurement, the group of Inventive Examples 21 c to 23c, the group of Inventive Examples 21b to 23b, the group of Inventive Examples 21a to 23a and the group of Inventive Examples 21d to 23d exhibited a more stable and higher high-temperature purifying rate, and a better purifying performance, in this order.

As compared with Inventive Examples 21 a to 23a, 21 b to 23b, 21 c to 23c, 21 d to 23d, the group of Comparative Examples 21 e to 23e exhibited a lower high-temperature CO purifying rate, in approximately the entire region where the CeO₂ / (CeO₂ + ZrO₂) mass ratio is in the range of 36 to 64 mass%. Moreover, in Comparative Example 11f, the high-temperature CO purifying rate was significantly low, and an adequate purifying performance could not be obtained.

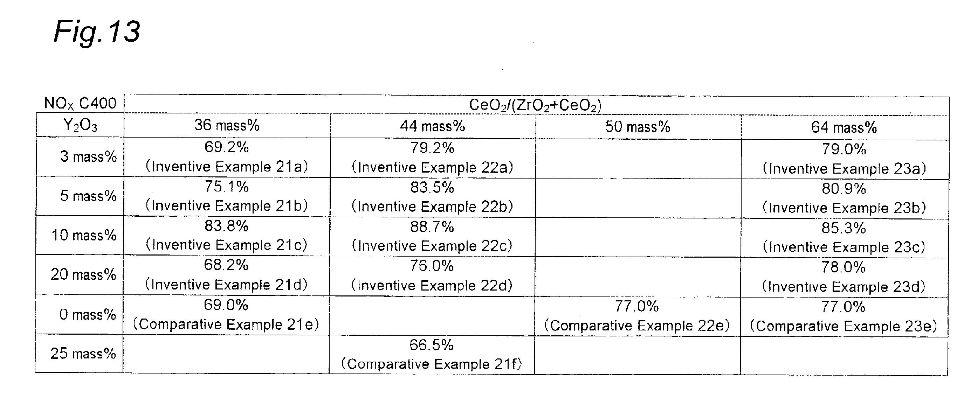

As seen in the table of FIG. 13 about the high-temperature NOx purifying rate, in four groups of Inventive Examples each having the same Y₂O₃ doping ratio (i.e., the group of Inventive Examples 21a to 23a, the group of Inventive Examples 21b to 23b, the group of Inventive Examples 21c to 23c and the group of Inventive Examples 21d to 23d), an adequate purifying performance is maintained in the region where the CeO₂ / (CeO₂ + ZrO₂) mass ratio is in the range of 36 to 64 mass%. In this measurement, the group of Inventive Examples 21c to 23c, the group of Inventive Examples 21b to 23b, the group of Inventive Examples 21a to 23a and the group of Inventive Examples 21d to 23d exhibited a more stable and higher high-temperature purifying rate, and a better purifying performance, in this order.

As compared with Inventive Examples 21a to 23a, 21b to 23b, 21c to 23c, 21d to 23d, the group of Comparative Examples 21e to 23e exhibited a lower high-temperature NOx purifying rate, in approximately the entire region where the CeO₂ / (CeO₂ + ZrO₂) mass ratio is in the range of 36 to 64 mass%. Moreover, in Comparative Example 11f, the high-temperature NOx purifying rate was significantly low, and an adequate purifying performance could not be obtained.

As evidenced by the measurement result illustrated in FIGS. 11 to 13, as to each of the HC, CO and NOx purifying rates, the high-temperature purifying performance is stably ensured in the region where the CeO₂ / (CeO₂ + ZrO₂) mass ratio is in the range of 36 to 64 mass% (more preferably in the range of 44 to 64 mass%), and the Y₂O₃ doping ratio is in the range of 3 to 20 mass% (more preferably in the range of 5 to 20 mass%). That is, when the Rh-doped CeZrY composite oxide contains CeO₂ and ZrO₂ in such a manner that the CeO₂ / (Ce02 + ZrO₂) mass ratio is in the range of 36 to 64 mass%, and contains Y₂O₃ in such a manner that the Y₂O₃ doping ratio is in the range of 3 to 20 mass%, a catalytic function can be sufficiently exhibited.

As above, when La or Y is employed as the rear-earth metal other than Ce, the same effect as in the catalyst employing Pr can also be obtained.

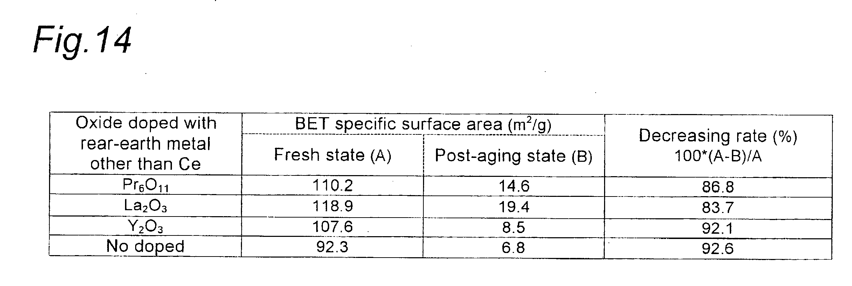

FIG. 14 is a table showing a BET specific surface area in each of a Rh-doped CeZrPr composite oxide, a Rh-doped CeZrLa composite oxide and a Rh-doped CeZrY composite oxide each including 10 mass% of an oxide (Pr₆O₁₁, La₂O₃, Y₂O₃) containing a rear-earth metal (Pr, La, Y) other than Ce, and a Rh-doped CeZr composite oxide doped with no rear-earth metal other than Ce.

As seen in the table, when the rear-earth metal other than Ce is doped, a BET specific surface area in a pre-aging state becomes larger, and a decreasing rate due to the aging becomes lower, as compared with the oxide doped with no rear-earth metal other than Ce. More specifically, the Rh-doped CeZrLa composite oxide including La₂O₃ has the largest BET specific surface area, and the BET specific surface area becomes smaller in the Rh-doped CeZrPr composite oxide including Pr₆O₁₁, the Rh-doped CeZrY composite oxide including Y₂O₃ and the Rh-doped CeZr composite oxide doped with no rear-earth metal other than Ce, in this order. Further, the Rh-doped CeZrLa composite oxide including La₂O₃ has the smallest decreasing rate due to the aging, and the decreasing rate becomes larger in the Rh-doped CeZrPr composite oxide including Pr₆O₁₁, the Rh-doped CeZrY composite oxide including Y₂O₃ and the Rh-doped CeZr composite oxide doped with no rear-earth metal other than Ce, in this order.

Thus, the rear-earth metal other than Ce can be doped in the Rh-doped CeZr composite oxide to ensure a larger BET specific surface area even after the aging so as to maintain a catalytic function contributing to an exhaust gas purifying reaction to achieve further enhanced purifying performance.

It is understood that the present invention is not limited to the illustrated embodiment, but various modifications and changes in design may be made therein without departing from the scope of the present invention, as defined in the claims.

## Claims

1. An exhaust gas purifying catalyst comprising a honeycomb-shaped substrate and a catalyst layer formed on a surface of said substrate, said catalyst layer including a cerium-zirconium (CeZr) based composite oxide which has a catalytic noble metal, wherein said composite oxide contains ceria (CeO₂) and zirconia (ZrO₂) in such a manner that a mass ratio of said ceria to a total mass of said ceria and zirconia falls within the range of 36 to 64 mass%,
**characterized in that**
said composite oxide further contains, in the form of an oxide, a rare-earth metal other than cerium (Ce), at least one such metal selected from the group consisting of praseodymium (Pr), lanthanum (La) and yttrium (Y), in the range of 3 to 20 mass% with respect to a total mass of said composite oxide, and
said catalytic noble metal is arranged at at least one of a lattice position and an interlattice position of a crystal structure of said composite oxide.

2. The exhaust gas purifying catalyst as defined in claim 1, **characterized in that** said mass ratio of the ceria to the total mass of the ceria and zirconia is in the range of 44 to 64 mass%.

## Patentansprüche

1. Abgasreinigungskatalysator, welcher ein wabenförmiges Substrat und eine auf einer Oberfläche des Substrats ausgebildete Katalysatorschicht umfasst, wobei die Katalysatorschicht ein cer-zirconium(CeZr)-basiertes Verbundoxid umfasst, das ein katalytisches Edelmetall aufweist, wobei das Verbundoxid Cerdioxid (CeO₂) und Zirconiumoxid (ZrO₂) in solcher Weise enthält, dass ein Massenverhältnis des Cerdioxids zu einer Gesamtmasse des Cerdioxids und des Zirconiumoxids in den Bereich von 36 bis 64 Masseprozent fällt,
**dadurch gekennzeichnet ist, dass**
das Verbundoxid weiterhin in der Form eines Oxids ein anderes Seltenerdmetall als Cerium (Ce), mindestens ein solches Metall gewählt aus der Gruppe bestehend aus Praseodym (Pr), Lanthan (La) und Yttrium (Y), in dem Bereich von 3 bis 20 Masseprozent bezüglich einer Gesamtmasse des Verbundoxids enthält und
das katalytische Edelmetall an mindestens einer von einer Gitterposition und einer Zwischengitterposition einer Kristallstruktur des Verbundoxids angeordnet ist.

2. Abgasreinigungskatalysator nach Anspruch 1, **dadurch gekennzeichnet, dass** das Massenverhältnis des Cerdioxids zu der Gesamtmasse des Cerdioxids und des Zirconiumoxids in dem Bereich von 44 bis 64 Masseprozent liegt.

## Revendications

1. Catalyseur de purification des gaz d'échappement comprenant un substrat en forme de nid d'abeilles et une couche de catalyseur formée sur une surface dudit substrat, ladite couche de catalyseur comprenant un oxyde composite à base de cérium-zirconium (CeZr) qui présente un métal noble catalytique, dans lequel ledit oxyde composite contient de l'oxyde de cérium (CeO₂) et de l'oxyde de zirconium (ZrO₂) de telle façon qu'un rapport de masse dudit oxyde de cérium à une masse totale desdits oxyde de cérium et oxyde de zirconium est compris dans l'intervalle de 36 à 64 %m,
**caractérisé en ce que**
ledit oxyde composite contient en outre, sous forme d'un oxyde, un métal de terres rares autre que le cérium (Ce), au moins un tel métal sélectionné dans le groupe constitué du praséodyme (Pr), du lanthane (La) et de l'yttrium (Y), dans l'intervalle de 3 à 20 %m par rapport à une masse totale dudit oxyde composite,
et
ledit métal noble catalytique est agencé dans au moins l'un parmi un site et une position interstitielle d'une structure cristalline dudit oxyde composite.

2. Catalyseur de purification des gaz d'échappement selon la revendication 1, **caractérisé en ce que** ledit rapport de masse de l'oxyde de cérium à la masse totale de l'oxyde de cérium et de l'oxyde de zirconium est dans l'intervalle de 44 à 64 %m.
